(19) Europäisches Patentamt
European Patent Office
Office européen des brevets

(11) Veröffentlichungsnummer: **0 507 176 A2**

(12) # EUROPÄISCHE PATENTANMELDUNG

(21) Anmeldenummer: **92104976.3**

(22) Anmeldetag: **23.03.92**

(51) Int. Cl.[5]: **C08G 63/79**, C08G 63/19, C08G 63/00, C08G 63/64, C08G 64/20, C08G 64/18, C08G 64/04, C08G 64/00, C08L 67/02, C08L 69/00, C08L 21/00, //(C08L67/02, 21:00),(C08L69/00,21:00), (C08L21/00,67:02),(C08L21/00, 69:00)

(30) Priorität: **05.04.91 DE 4110974**

(43) Veröffentlichungstag der Anmeldung:
**07.10.92 Patentblatt 92/41**

(84) Benannte Vertragsstaaten:
**DE FR GB IT**

(71) Anmelder: **BAYER AG**

**W-5090 Leverkusen 1 Bayerwerk(DE)**

(72) Erfinder: **Lütjens, Holger, Dr.**
**Rybniker Strasse 12**
**W-5000 Köln 80(DE)**
Erfinder: **Piejko, Karl-Erwin, Dr.**
**Unterscheider Weg 7a**
**W-5060 Bergisch Gladbach 2(DE)**
Erfinder: **Lindner, Christian, Dr.**
**Im Wasserblech 11**
**W-5000 Köln 80(DE)**
Erfinder: **Constant, Dieter, Dr.**
**Ouettinger Strasse 225**
**W-5090 Leverkusen 3(DE)**

(54) **Darstellung von kautschukhaltigen Polyestern, Polycarbonaten oder Polyestercarbonaten.**

(57) Verfahren zur Herstellung von hochkautschukhaltigen Polymerkombinationen aus A) aromatisierten Polyestern und B) zumindest teilvernetzten Kautschuken, wobei man

1) einen wäßrigen Kautschuklatex, enthaltend bis zu 65 Gew.-% Festkautschuk, mit einer wäßrigen Alkalidiphenolat-Lösung und einem mit Wasser nicht mischbaren organischen Lösungsmittel in einer Menge von 10 bis 1000 Gew.-Teilen pro 100 Gew.-Teile Kautschuk im Latex vermischt,
2) die nach 1) erhaltene Mischung mit Dicarbonsäurehalogeniden und/oder Carbonylhalogeniden umsetzt und
3) die gebildete Polymerkombination isoliert.

EP 0 507 176 A2

Gegenstand der Erfindung ist ein Verfahren zur Herstellung hochkautschukhaltiger Polymerkombinationen.

Hochkautschukhaltige Polymerkombinationen aus elastischen, vernetzten Kautschukpolymerisaten und hochwärmeformbeständigen, thermoplastischen aromatischen Polyestern besitzen u.a. gute Thermostabilität und Alterungsbeständigkeit. Sie können thermoplastische Kunststoffe oder Kautschuke sein.

Nach älteren Patentanmeldungen (DE-OS 4 020 256 und DE-OS 4 018 717 können sie durch eine modifizierte Phasengrenzflächenpolykondensation hergestellt werden, bei der eine wäßrige Alkali- oder Erdalkali-diphenolatlösung mit einem Dicarbonsäurehalogenid und/oder Carbonylhalogenid in einem mit Wasser nicht mischbaren, organischen Lösungsmittel in Gegenwart eines zumindest teilvernetzten Kautschuks, der als wäßriger Latex vorliegt, umgesetzt wird. Zur Aufarbeitung wird anschließend die organische Phase, enthaltend die Polymerkombination aus Kautschuk und aromatischem Polyester von der wäßrigen Phase abgetrennt und die Polymerkombination aus der organischen Phase durch Eindampfen des organischen Lösungsmittels oder durch Koagulation in einem organischen Fällungsmedium isoliert.

Dieses Verfahren erfordert eine große Menge organischer Lösungsmittel, d.h. einen sehr großen Überschuß an organischem Lösungsmittel in bezug auf den Kautschuk im Latex, (pro 100 Gew.-Tle. Kautschuk im Latex 2000 - 8000 Gew.-Tle. organisches Lösungsmittel). Dieses hat zur Folge, daß bei der Herstellung hochkautschukhaltiger Polymerkombinationen aufgrund der starken Verdünnung die aromatischen Polyester verhältnismäßig niedrige Molgewichte haben.

Es wurde nun ein Verfahren zur Herstellung hochkautschukhaltiger Polymerkombinationen dieser Art gefunden, das nur geringe Mengen an organischen Lösungsmitteln benötigt und zugleich aromatische Polyester mit höheren Molgewichten liefert. Zugleich ist die Isolierung der hochkautschukhaltigen Polymerkombination einfacher, weil weniger Lösungsmittel zu entfernen ist.

Gegenstand der Erfindung ist ein Verfahren zur Herstellung hochkautschukhaltiger Polymerkombinationen aus A) aromatischen Polyestern und B) zumindest teilvernetzten Kautschuken, in dem man

1) einen wäßrigen Kautschuklatex, enthaltend bis zu 65 Gew.-%, insbesondere bis zu 50 Gew.-%, Festkautschuk mit einer wäßrigen Alkalidiphenolat-Lösung und einem mit Wasser nicht mischbaren organischen Lösungsmittel in einer Menge von 10 - 1000 Gew.-Teilen pro 100 Gew.-Tle. Kautschuk im Latex vermischt.

2) die nach 1) erhaltende Mischung mit Dicarbonsäurehalogeniden und/oder Carbonylhalogeniden umsetzt und

3) die gebildete Polymerkombination isoliert.

Hochkautschukhaltige Polymerkombinationen im Sinne der Erfindung enthalten Interpolymerisate aus aromatischen Polyestern und 50 - 95 Gew.-%, insbesondere 50 - 85 Gew.-%, zumindest teilvernetzten Kautschuken und zusätzlich gegebenenfalls freie aromatische Polyester. Mit Interpolymerisat wird im folgenden ein Kombinationsprodukt aus aromatischem Polyester und vernetztem Kautschuk bezeichnet, das sich durch physikalische Methoden nicht vollständig in die reinen Komponenten zerlegen läßt, in dem also aromatischer Polyester und Kautschuk chemisch miteinander verbunden sind. Typische Interpolymerisate in diesem Sinne sind Blockcopolymerisate und Pfropfcopolymerisate.

Den aromatischen Polyestern - der Begriff schließt erfindungsgemäß aromatische Polyester, aromatische Polycarbonate und aromatische Polyestercarbonate ein -, die im Rahmen der Erfindung hergestellt werden, liegen Diphenole der Formel (I) zugrunde.

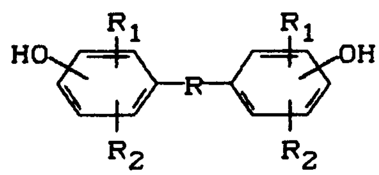

(I)

mit $R_1$, $R_2$ = H, $C_1$-$C_4$-Alkyl, Halogen, bevorzugt H, $CH_3$, Cl, Br,

R = Einfachbindung, $C_1$-$C_{12}$-Alkylen, $C_5$-$C_{20}$-Cycloalkylen, Arylen, bevorzugt $-CH_2-$, $-C_2H_4-$, $-C_3H_6-$, -S-,

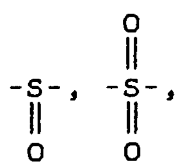

-O-, Geeignete Diphenole der Formel (I) sind beispielsweise Hydrochinon, Resorcin, 4,4-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan. Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan, 1,1-Bis-(4-hydroxyphenyl)-3,3,5-trimethyl-cyclohexan, (DE-OS 3 832 396), besonders bevorzugt 2,2-Bis-(4-hydroxyphenyl)-propan und 1,1-Bis-(4-hydroxyphenyl)-3,3,5-trimethylcyclohexan und deren Gemische.

Zur Bildung von aromatischen Polycarbonaten werden diese Diphenole mit Carbonylhalogeniden wie Carbonylbromid, Phosgen oder dessen Gemischen, oder mit Bischlorformiaten von 2,2-Bis-(4-hydroxyphenyl)-propan; 2,2-Bis(4-hydroxy-3,5-dichlorphenyl)-propan oder Hydrochinon umgesetzt.

Zur Herstellung von aromatischen Polyestern verwendet man zur Umsetzung Dicarbonsäurehalogenide, beispielsweise Oxalylchlorid, Succinylchlorid, Fumarylchlorid, Glutarylchlorid, Adipylchlorid, Pimelylchlorid, Suberylchlorid, Azelaylchlorid, Sebacylchlorid, Phthaloylchlorid, Isophthaloylchlorid, Terephthaloylchlorid. Bevorzugt sind Terephthaloylchlorid, Isophthaloylchlorid und deren Gemische, wobei das Verhältnis der Isophthaloylreste zu den Terephthaloylresten vorzugsweise 3:7 bis 7:3 insbesondere 4,5:5,5 bis 5,5:4,5, ist.

Zur Herstellung von Polyestercarbonaten verwendet man ein Gemisch aus Carbonylhalogenid und Dicarbonsäurehalogenid in einer solchen Menge, daß sich, bezogen auf die Summe von Ester und Carbonatgruppierungen bis zu 90, vorzugsweise bis zu 45 Mol-% Carbonatgruppierungen bilden.

Die für das erfindungsgemäße Verfahren geeigneten Kautschuke liegen in Form ihrer Latices vor. Sie sind im allgemeinen teilvernetzt oder vernetzt und besitzen Erweichungstemperaturen unter 0 ° C. Diese Kautschuke und ihre Latices sind bekannt. Besonders geeignet sind Dienkautschuke, insbesondere Polymerisate von Butadien, Isopren, Chloropren mit gegebenenfalls bis zu 30 Gew.-% eines Comonomeren wie Styrol, Acrylnitril, Vinylether und Acrylatkautschuke, insbesondere Polymerisate von Alkylacrylaten mit gegebenenfalls bis zu 50 Gew.-% Comonomeren wie Butadien, Alkylmethacrylat, Vinylacetat, Styrol, Vinyl, Alkylether, Acrylnitril, sowie Olefinkautschuke, insbesondere aus Ethylen mit Comonomeren wie Vinylacetat, Alkylacrylat, Kohlenmonoxid, Propylen, Isobutylen und ferner Siliconkautschuke, insbesondere aus Struktureinheiten der allgemeinen Formel

$R_nSiO_{4-n/2}$,

worin R ein einwertiger Kohlenwasserstoffrest, z.B. $C_1$-$C_{18}$-Alkyl oder $C_6$-$C_{10}$-Aryl ist und n einen Durchschnittswert von 1 bis weniger als 3 besitzt.

Die Kautschuke liegen, wie gesagt, als Latices vor, die mittleren Teilchendurchmesser ($d_{50}$) in den Latices sind 0,05 bis 1,5, insbesondere 0,07 bis 0,5 µm. Die Gelgehalte als Maß für die Vernetzung sind bevorzugt >50 Gew.-%, besonders bevorzugt >85 Gew.-%.

Die Kautschuke können reaktive Gruppen enthalten, die mit den aromatischen Polyestern bei deren Bildung reagieren können. Solche Gruppen, im folgenden mit X bezeichnet, sind z.B. -OH, $-CH_2Hal$ (Hal = Halogen, z.B. Chlor, Brom)

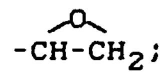

-COOH; -CO-Hal (Hal = Halogen, z.B. Chlor, Brom).

Die Menge der Struktureinheiten, enthaltend Reaktivgruppen X, im Kautschuk beträgt 1 bis 10 Mol-% der gesamten Struktureinheiten des Kautschuks. Die Reaktivgruppen X werden beispielsweise durch Copolymerisation von Monomeren wie Hydroxyethylmethacrylat, Hydroxyethylacrylat, Hydroxystyrol, p-Isopropenylphenol, 2-(Hydroxyphenyl)-3-(p-isopropenylphenyl)-propan, Chlormethylstyrol, Glycidylmethacrylat, Methacrylsäure, Acrylsäure mit den, den Kautschuk bildenden Monomeren oder durch Pfropfpolymerisation von Monomeren, enthaltend die Reaktivgruppen X, auf den fertigen Kautschuk eingeführt. Die Reaktivgruppen X können auch durch polymeranaloge Reaktionen an Kautschuken mit copolymerisierten Struktureinheiten, die Reaktivgruppen Y enthalten, vor oder während der Polykondensation erzeugt werden. Geeignete Reaktivgruppen Y (die wenigstens zu einem Anteil in Reaktivgruppen X überführt werden können) sind verkappte Phenolgruppen wie Phenolester der Struktur
Y =

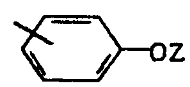

mit Z =

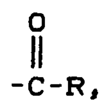

worin R = $C_1$-$C_4$-Alkyl,
oder Trialkylsilanderivate der Struktur
Y =

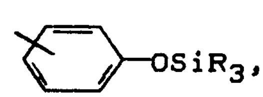

worin R = $C_1$-$C_4$-Alkyl,
die im alkalischen oder sauren Milieu wenigstens teilweise unter Bildung der Phenolgruppe gespalten werden. Die Menge der copolymerisierten und/oder aufgepfropften Struktureinheiten mit Reaktivgruppen Y beträgt 1 Mol-% bis 10 Mol-% der gesamten Struktureinheiten des Kautschuks.

Reaktivgruppen Y werden beispielsweise durch Copolymerisation von Monomeren wie p-Isopropenylphenylacetat, p-Acetoxystyrol, Trimethyl-(4-isopropenylphenoxy)-silan mit den, den Kautschuk aufbauenden Monomeren oder durch Pfropfpolymerisation von Monomeren mit Reaktivgruppen Y, auf den Kautschuk eingeführt.

Besonders bevorzugt sind Acrylatkautschuke, die vorzugsweise durch radikalische Emulsionspolymerisation erhalten worden sind. Hier handelt es sich um vernetzte, teilchenförmige Emulsionspolymerisate von $C_1$-$C_8$-Alkylacrylaten, insbesondere $C_2$-$C_8$-Alkylacrylaten, gegebenenfalls in Mischung mit bis zu 30 Gew.-% eines Comonomeren wie Styrol, Methylmethacrylat, Butadien, Vinylmethylether, Acrylnitril und wenigstens einem polyfunktionellen vernetzenden Comonomer, wie Divinylbenzol, Glykolbisacrylat, Butandiolbisacrylate, Bisacrylamid, Phosphorsäuretriallylester, Allylester der Acrylsäure, Allylester der Methacrylsäure, Triallylcyanurat, Triallylisocyanurat in Mengen bis zu 4 Gew.-%, bezogen auf die gesamten Monomeren.

Daneben können die Kautschuke die Reaktivgruppen X und/oder Y enthalten, die vorzugsweise durch Einbau im Hydroxyethylacrylat, Hydroxyethylmethacrylat oder p-Isopropenylphenylacetat erzeugt werden.

Auch Kautschuke mit Kern/Mantel-Struktur, wie beispielsweise in DE-OS 3 200 070 und DE-OS 3 704 657 beschrieben, können verwendet werden.

Das erfindungsgemäße Verfahren wird im Prinzip wie folgt ausgeführt:

In einer ersten Stufe wird zunächst der wäßrige Latex eines vernetzten oder teilvernetzten Kautschuks, bevorzugt eines Acrylatkautschuks, mit einer wäßrigen Lösung eines Alkalisalzes des Diphenols der Formel (I) bei 0 bis 50 °C, bevorzugt 10 - 25 °C, vermischt. Die Kautschuklatices besitzen vorzugsweise einen Feststoffgehalt von 10 - 65 Gew.-%, insbesondere 10 - 50 Gew.-%. Hierbei ist es vorteilhaft, zusätzlich oberflächenaktive Verbindungen aus der Reihe der Emulgatoren oder Dispergatoren, beispielsweise Alkylsulfonate, Alkylbenzolsulfonate, Alkoholsulfonate, alkoxylierte Fettalkohole, alkoxylierte Alkylphenole, Polyvinylalkohol, partiell hydrolysierte Polyvinylacetate in Mengen von 1 - 15 Gew.-% bezogen auf Kautschuk im Latex einzusetzen.

Die wäßrigen Diphenolatlösungen können durch Lösen des Diphenols der Formel (I) in einer wäßrigen Alkalihydroxidlösung, vorzugsweise Natronlauge hergestellt werden. Besonders bevorzugte Diphenole der Formel (I) sind 2,2-Bis-(4-hydroxyphenyl)-propan und 1,1-Bis-(4-hydroxyphenyl)-3,3,5-trimethylcyclohexan und deren Gemische. Der die wäßrige Diphenolatlösung enthaltende Kautschuk-Latex wird anschließend mit einem mit Wasser nicht mischbaren, inerten organischen Lösungsmittel, vorzugsweise Methylenchlorid und/oder Chlorbenzol, das gegebenenfalls Phasentransferkatalysatoren, z.B. quartäre Ammoniumverbindungen gelöst enthält, vermischt. In einer zweiten Stufe wird zu dieser Mischung das Dicarbonsäurehalogenid und/oder das Carbonylhalogenid, gegebenenfalls in einem mit Wasser nicht mischbaren inerten organischen Lösungsmittel gelöst, bei 0 bis 50 °C, vorzugsweise 10 - 25 °C, innerhalb eines Zeitraumes von 5 Minuten bis 5 Stunden, vorzugsweise 5 Minuten bis 2 Stunden gegeben. Insgesamt werden pro 100 Gew.-Tle. Kautschukpolymer im Latex 10 - 1000 Gew.-Tle. organisches Lösungsmittel, vorzugsweise 10 - 500 Gew.-Tle. organisches Lösungsmittel eingesetzt.

Werden Dicarbonsäurehalogenide und Carbonylhalogenide nebeneinander eingesetzt, ist es vorteilhaft, zunächst Dicarbonsäurehalogenid und danach Carbonylhalogenid zuzufügen. Nach Zugabe des Carbonylhalogenids können gegebenenfalls Katalysatoren, beispielsweise tertiäre Amine, wie z.B.Triethylamin oder N-Ethylpiperidin zugesetzt werden.

Das Molekulargewicht des aromatischen Polyesters - im Sinne der oben gegebenen Definition - kann gegebenenfalls durch Zusatz eines Kettenabbrechers in bekannter Weise geregelt werden. Geeignete Kettenabbrecher sind beispielsweise Phenol und Phenole mit $C_1$-$C_{22}$-Alkylgruppen wie p-tert.-Butylphenol und p-Isooctylphenol.

Als Säureakzeptoren können tertiäre Amine, Alkalihydroxide oder Erdalkalihydroxide, vorzugsweise Natriumhydroxid, verwendet werden.

In einer dritten Stufe wird die gebildete Polymer-Kombination aus der Reaktionsmischung isoliert. Vorzugsweise wird die Isolierung unter Zusatz von Elektrolyten, beispielsweise Erdalkalisulfat vorzugsweise bei Temperaturen von 50 - 90 °C durchgeführt, die Polymerkombination durch Filtration abgetrennt und mit Wasser gewaschen. Gegebenenfalls kann vor der Isolierung der Polymerkombination das organische Lösungsmittel aus der Reaktionsmischung entfernt werden, beispielsweise durch Destillation, Anlegen eines Vakuums oder Durchleiten eines Stickstoffstroms. Besonders vorteilhaft ist es, zur Isolierung der Polymerkombination die Reaktionsmischung bei Temperaturen von 50 - 90 °C in eine wäßrige Lösung, bestehend aus Elektrolyt, vorzugsweise Erdalkalisulfat und mineralischen Säuren, beispielsweise Phosphorsäure oder organische Säuren, beispielsweise Essigsäure unter Durchmischung einzubringen und anschließend die Abtrennung und Wäsche der Polymerkombination vorzunehmen. Die Menge an mineralischer oder organischer Säure sollte so bemessen sein, daß die basische Reaktionsmischung zumindest

neutralisiert wird, d.h. nach Abtrennen der Polymerkombination sollte der pH-Wert des wäßrigen Filtrats zwischen 3 und 7 liegen.

Die erfindungsgemäß hergestellten hochkautschukhaltigen Polymerkombinationen können mit aromatischen Polyestern - der Begriff schließt aromatische Polyester, aromatische Polycarbonate und aromatische Polyestercarbonate ein -gemischt werden, wobei aromatische Polyester in Pulverform oder als Granulat verwendet werden können. Diese Mischungen enthalten 1-99 Gew.-%, besonders bevorzugt 5-80 Gew.-%, insbesondere bevorzugt 7-40 Gew.-%, der hochkautschukhaltigen Polymerkombinationen und 99-1 Gew.-%, besonders bevorzugt 95-20 Gew.-%, insbesondere 93-60 Gew.-% der aromatischen Polyester. Das Vermischen der hochkautschukhaltigen Polymerkombinationen mit den aromatischen Polyestern kann in üblichen Mischaggregaten wie Walzen, Knetern, Ein- oder Mehrwellenextrudern erfolgen. Die Mischungen sind zur Herstellung von Formkörpern aller Art mit Methoden der thermoplastischen Formgebung wie Extrusion und Spritzguß geeignet und besitzen verbesserte Elastizität und Bruchdehnung, gute Oberflächeneigenschaften wie Glanz, Homogenität, Gleichmäßigkeit und besonders helle Farbe. Weiterhin lassen sich aus den hochkautschukhaltigen Polymerkombinationen elastische Formkörper herstellen, die sich durch gute Thermostabilität, Alterungsbeständigkeit und vorteilhafte mechanische Eigenschaften wie Zugfestigkeit auszeichnen.

Beispiele:

1. Herstellung der Kautschuklatices

1.1

In einem Reaktor werden unter Stickstoff 28 Gew.-Teile eines Polybutadienlatex mit einem Feststoffgehalt von 41,8 Gew.-% (mittlerer Teilchendurchmesser ($d_{50}$): 100 nm, Gelgehalt gemessen in Toluol: 91 Gew.-%) und 820 Gew.-Teile Wasser vorgelegt und auf 80 °C erhitzt. Hierzu fügt man eine Mischung aus 61,2 Gew.-Teilen n-Butylacrylat, 3,3 Gew.-Teilen p-Isopropenylphenylacetat (3,75 mol%) und 0,5-Gew.-Teilen Triallylcyanurat. Anschließend gibt man bei 80 °C eine Lösung aus 2,3 Gew.-Teilen Kaliumperoxodisulfat und 50 Gew.-Teilen Wasser hinzu und rührt 1 Stunde. Bei 75 °C werden dann innerhalb 4 Stunden gleichmäßig zugefügt:

Zulauf 1: 1558 Gew.-Teile n-Butylacrylat
83 Gew.-Teile p-Isopropenylphenylacetat (3,75 Mol%)
13,5 Gew.-Teile Triallylcyanurat
Zulauf 2: 18 Gew.-Teile Natriumsalz von $C_{14}$-$C_{18}$-Alkylsulfonsäuren
1950 Gew.-Teile Wasser

Danach wird noch 4 Stunden bei 75 °C gerührt. Der erhaltene Latex besitzt einen Feststoffgehalt von 37,7 Gew.-%.

Der Gelgehalt des Polymerisates beträgt 92,5 Gew.-% (in Tetrahydrofuran gemessen). Der Latex wird mit Wasser auf einen Feststoffgehalt von 20 Gew.-% verdünnt und in den Beispielen eingesetzt.

1.2

Wie in Beispiel 1.1 wird ein Kautschuklatex hergestellt aus:
61,2 Gew.-Teilen n-Butylacrylat
3,3 Gew.-Teilen 2-Hydroxyethylmethacrylat (5 Mol%)
0,5 Gew.-Teilen Triallylcyanurat

Zulauf 1: 1558 Gew.-Teile n-Butylacrylat
83 Gew.-Teile 2-Hydroxyethylmethacrylat (5 Mol%)
13,5 Gew.-Teile Triallylcyanurat
Zulauf 2: 18 Gew.-Teile Natriumsalz von $C_{14}$-$C_{18}$-Alkylsulfonsäuren
1950 Gew.-Teile Wasser

Der erhaltene Latex besitzt einen Feststoffgehalt von 37,7 Gew.-%. Der Gelgehalt des Polymerisat beträgt 93,0 Gew.-% (in Tetrahydrofuran gemessen). Der Latex wird mit Wasser auf einen Feststoffgehalt von 20 Gew.-% verdünnt und in dem Beispiel 2.2 eingesetzt.

1.3

Wie in Beispiel 1.1 wird ein Kautschuklatex hergestellt aus:
64,5 Gew.-Teilen n-Butylacrylat
0,5 Gew.-Teilen Triallylcyanurat

Zulauf 1: 1641 Gew.-Teile n-Butylacrylat
13,5 Gew.-Teile Triallylcyanurat
Zulauf 2: 18 Gew.-Teile Natriumsalz von $C_{14}$-$C_{18}$-Alkylsulfonsäuren
1950 Gew.-Teile Wasser

Der erhaltene Latex besitzt einen Feststoffgehalt von 37,7 Gew.-%. Der Gelgehalt beträgt 92,0 Gew.-% (in Tetrahydrofuran gemessen). Der Latex wird mit Wasser auf einen Feststoffgehalt von 20 Gew.-% verdünnt und in dem Beispiel 2.4 eingesetzt.

2. Herstellung der Polymerkombinationen

2.1

420 g Kautschuklatex gemäß Beispiel 1.1 mit einem Feststoffgehalt von 20 Gew.-% werden mit einer Lösung aus
22,83 g (0,10 mol) 2,2 Bis-(4-hydroxyphenyl)-propan (im weiteren Text Bisphenol A)

8,5 g Natriumhydroxid
4,0 g Natriumsalz von
$C_{14}$-$C_{18}$-Alkylsulfonsäuren in 425 g Wasser durchmischt.

Anschließend erfolgt die Zugabe von 0,65 g Tetrabutylammoniumbromid in 40 g Methylenchlorid. Unter ständiger Durchmischung wird dann innerhalb von 15 Min. eine Lösung aus
10,36 g (0,051 Mol) Terephthaloylchlorid
10,36 g (0,051 Mol) Isophthaloylchlorid in
50 g Methylenchlorid
zugegeben. Danach wird noch 30 Minuten nachgerührt.

Zur Aufarbeitung wird die Reaktionsmischung in eine auf 80 - 90 ° C erhitzt Vorlage aus:
10 g Magnesiumsulfat
10 g konzentrierte Essigsäure und 2000 g Wasser
unter Durchmischung eingetragen.

Die gefällte Polymerkombination wird abfiltriert, elektrolytfrei gewaschen und getrocknet.
Menge an Polymerisat: 118 g
Gelgehalt (gemessen in Tetrahydrofuran): 72,0 Gew.-%
[$\eta$]-Solphase: 0,51 dl/g
[$\eta$] = Intrinsic-Viskosität, gemessen in Tetrahydrofuran
bei 25 ° C.

2.2

Man verfährt wie in Beispiel 2.1, verwendet aber 420 g Kautschuklatex gemäß Beispiel 1.2 mit einem Feststoffgehalt von 20 Gew.-%.
Menge an Polymerisat: 116 g
Gelgehalt (gemessen in Tetrahydrofuran): 74,0 Gew.-%
[$\eta$]-Solphase: 0,50 dl/g.

2.3

Man verfährt wie in Beispiel 2.1, verwendet aber 270 g Kautschuklatex gemäß Beispiel 1.1 mit einem Feststoffgehalt von 20 Gew.-%.
Menge an Polymerisat: 88,5 g.
Gelgehalt (gemessen in Tetrahydrofuran): 63,5 Gew.-%
[$\eta$]-Solphase: 0,48 dl/g.

2.4

180 g Kautschuklatex gemäß Beispiel 1.3 mit einem Feststoffgehalt von 20 Gew.-% werden mit einer Lösung aus:
22,83 g (0,10 mol) Bisphenol A
8,5 g Natriumhydroxid
4,0 g Natriumsalz von $C_{14}$-$C_{18}$-Alkylsulfonsäuren in 425 g Wasser
durchmischt.

Anschließend erfolgt die Zugabe von 0,65 g Tetrabutylammoniumbromid in 20 g Methylenchlorid. Unter ständiger Durchmischung wird dann innerhalb von 15 Minuten eine Lösung aus
10,36 g (0,051 Mol) Terephthaloylchlorid
10,36 g (0,051 Mol) Isophthaloylchlorid in
50 g Methylenchlorid
zugegeben und 30 Minuten nachgerührt.

Die Aufarbeitung erfolgt gemäß Beispiel 2.1.
Menge an Polymerisat: 69,6 g
Gelgehalt (gemessen in Tetrahydrofuran): 47,0 Gew.-%
[$\eta$]-Solphase: 0,52 dl/g

2.5

380 g Kautschuklatex gemäß Beispiel 1.1 mit einem Feststoffgehalt von 20 Gew.-% werden mit einer Lösung aus:
22,83 g (0,10 Mol) Bisphenol A
24 g (0,60 Mol) Natriumhydroxid
5,0 g Natriumsalz von $C_{14}$-$C_{18}$-Alkylsulfonsäuren
in 425 g Wasser durchmischt.

Anschließend erfolgt die Zugabe von 0,97 g Tetrabutylammoniumbromid in 95 g Methylenchlorid.

Bei 20 - 25 ° C wird dann unter ständiger Durchmischung innerhalb von 5 Minuten 19,8 g (0,20 Mol) Phosgen eingeleitet und 45 Min. nachgerührt.

Zur Aufarbeitung wird die Reaktionsmischung in eine auf 80 - 90 ° C erhitzte Vorlage aus:
18 g Magnesiumsulfat
18 g konzentrierte Essigsäure und 2000 g Wasser
unter Durchmischung eingetragen. Die gefällte Polymerkombination wird abfiltriert, elektrolytfrei gewaschen und getrocknet.
Menge an Polymerisat: 99,5 g
Gelgehalt (gemessen in Tetrahydrofuran): 84,0 Gew.-%
[$\eta$]-Solphase: 0,37 dl/g

2.6

295 g Kautschuklatex gemäß Beispiel 1.1 mit einem Feststoffgehalt von 20 Gew.-% werden mit einer Lösung aus:
22,83 g (0,10 Mol) Bisphenol A
24 g (0,60 ml) Natriumhydroxid
5,0 g Natriumsalz von $C_{14}$-$C_{18}$-Alkylsulfonsäuren
in 425 g E-Wasser durchmischt.

Anschließend erfolgt die Zugabe von 65 g Methylenchlorid. Bei 20 -25 ° C wird dann unter ständiger Durchmischung innerhalb von 5 Minuten 19,8 g (0,20 Mol) Phosgen eingeleitet, anschließend 0,14 ml N-Ethylpiperidin hinzugegeben und 45 Min. nachgerührt. Die Aufarbeitung erfolgt gemäß Beispiel 2.5. Menge an Polymerisat: 83,0 g.

Gelgehalt (gemessen in Tetrahydrofuran): 82,2 Gew.-%.
[$\eta$]-Solphase: 0,45 dl/g

2.7

1320 g Kautschuklatex gemäß Beispiel 1.1 mit einem Feststoffgehalt von 20 Gew.-% werden mit einer Lösung aus:
43,4 g (0,14 Mol) 1,1-Bis-(4-hydroxyphenyl)-3,3,5-trimethylcyclohexan
59,4 g (0,26 Mol) Bisphenol A
96 g (2,40 Mol) Natriumhydroxid
20 g Natriumsalz von $C_{14}$-$C_{18}$-Alkylsulfonsäuren
in 1700 g E-Wasser durchmischt.

Anschließend erfolgte die Zugabe von 260 g Methylenchlorid. Bei 20-25 °C wird dann unter ständiger Durchmischung 80 g (0,80 Mol) Phosgen eingeleitet, wobei der pH-Wert gegebenenfalls durch Zugabe von Natronlauge (20 Gew.-%ig) auf pH = 13 gehalten wird. Anschließend werden 0,56 ml N-Ethylpiperidin zugegeben und 45 Minuten nachgerührt.

Zur Aufarbeitung wird die Reaktionsmischung in eine auf 80-90 °C erhitzte Vorlage aus:
72 g Magnesiumsulfat
120 g konz entrierte Essigsäure und 8000 g Wasser unter Durchmischung eingetragen.

Die gefällte Polymerkombination wird abfiltriert, elektrolytfrei gewaschen und getrocknet.
Menge an Polymerisat: 359,5 g
Gelgehalt (gemessen in Tetrahydrofuran): 83,7 Gew.-%
[$\eta$]-Solphase: 0,44 dl/g

2.8

Man verfährt wie in Beispiel 2.7, verwendet aber folgende Mengen der Ausgangsprodukte:
1396 g Kautschuklatex gemäß Beispiel 1.1 mit einem Feststoffgehalt von 20 Gew.-%,
Lösung aus:
68,2 g (0,22 Mol) 1,1-Bis(4-hydroxyphenyl)-3,3,5-trimethylcyclohexan
41,1 g (0,18 Mol) Bisphenol A
96 g (2,40 Mol) Natriumhydroxid
20 g (Natriumsalz von $C_{14}$-$C_{18}$-Alkylsulfonsäuren in 1760 g E-Wasser,
260 g Methylenchlorid,
80 g (0,80 Mol) Phosgen,
0,56 ml N-Ethylpiperidin.

Zur Aufarbeitung wird die Reaktionsmischung in eine auf 80-90 °C erhitzte Vorlage aus 80 g Magnesiumsulfat, 170 g konzentrierter Essigsäure und 8000 g Wasser unter Durchmischung eingetragen.

Die gefällte Polymerkombination wird abfiltriert, elektrolytfei gewaschen und getrocknet.
Menge an Polymerisat: 378 g
Gelgehalt (gemessen in Tetrahydrofuran): 79,2 Gew.-%
[$\eta$]-Solphase: 0,32 dl/g.

Die Gelgehalte wurden nach M. Hoffmann et. al. Polymeranalytik I und II, Georg Thieme Verlag, Stuttgart (1977) bestimmt.

Die nach dem erfindungsgemäßen Verfahren hergestellten Polymerkombinationen der Beispiele 2.1 - 2.8 stellen pulverförmige Produkte dar. Aus ihnen lassen sich elastische Formkörper herstellen, die sich durch hohe Alterungsbeständigkeit, hohe Thermostabilität und helle Farbe auszeichnen.

## Patentansprüche

**1.** Verfahren zur Herstellung von hochkautschukhaltigen Polymerkombinationen aus A) aromatischen Polyestern und B) zumindest teilvernetzten Kautschuken, dadurch gekennzeichnet, daß man
1) einen wäßrigen Kautschuklatex, enthaltend bis zu 65 Gew.-% Festkautschuk, mit einer wäßrigen Alkalidiphenolat-Lösung und einem mit Wasser nicht mischbaren organischen Lösungsmittel in einer Menge von 10 bis 1000 Gew.-Teilen pro 100 Gew.-Teile Kautschuk im Latex vermischt,
2) die nach 1) erhaltene Mischung mit Dicarbonsäurehalogeniden und/oder Carbonylhalogeniden umsetzt und
3) die gebildete Polymerkombination isoliert.

**2.** Verfahren nach Anspruch 1, dadurch gekennzeichnet, daß man unter Zusatz von Elektrolyten isoliert, die Polymerkombination durch Filtration abtrennt und mit wäßrigen Flüssigkeiten wäscht.

**3.** Verfahren nach Anspruch 1, dadurch gekennzeichnet, daß man in 1) zusätzlich oberflächenaktive Verbindungen (Emulgatoren oder Dispergatoren) einsetzt.

**4.** Verfahren nach Anspruch 1, dadurch gekennzeichnet, daß die als Latex eingesetzten Kautschuke Gelgehalte von größer als 50 Gew.-% und mittlere Teilchendurchmesser ($d_{50}$) von 0,05 - 1,5 $\mu$ aufweisen.

**5.** Verfahren nach Anspruch 1, dadurch gekennzeichnet, daß man als vernetzte (oder teilvernetzte) Kautschuke, Dienkautschuke und/oder Acrylatkautschuke und/oder Silikonkautschuke und/oder Olefinkautschuk in Latexform, gegebenenfalls mit eingebauten reaktiven Gruppen, einsetzt.